Europäisches Patentamt

European Patent Office

Office européen des brevets

(19)

(11) Publication number: **0 263 663 B1**

## EUROPEAN PATENT SPECIFICATION

(12)

(45) Date of publication of patent specification: **16.09.92**

(51) Int. Cl.⁵: **G11B 19/04**, G11B 7/013, G11B 11/10, G11B 13/04

(21) Application number: **87308806.6**

(22) Date of filing: **05.10.87**

(54) **Information processing apparatus in which erasing means is driven for a period longer than the necessary period.**

(30) Priority: **08.10.86 JP 238018/86**

(43) Date of publication of application:
**13.04.88 Bulletin 88/15**

(45) Publication of the grant of the patent:
**16.09.92 Bulletin 92/38**

(84) Designated Contracting States:
**DE FR GB IT NL**

(56) References cited:
**EP-A- 0 218 243**
**DE-A- 3 434 418**

**PATENT ABSTRACTS OF JAPAN vol. 7, no. 164 (P-211) 1309 19 July 1983, & JP-A-58 070402**

**PATENT ABSTRACTS OF JAPAN vol. 10, no. 48 (P-431) 2105 25 February 1986, & JP-A-60 193107**

**PATENT ABSTRACTS OF JAPAN vol. 9, no. 157 (P-369) 1880 02 July 1985, & JP-A-60 032166**

(73) Proprietor: **CANON KABUSHIKI KAISHA 30-2, 3-chome, Shimomaruko, Ohta-ku Tokyo(JP)**

(72) Inventor: **Aizawa, Takyuki No. 1115, Yokomizo Daini Manshon 23-24, Shinishikawa 1-chome Midori-ku Yokohama-shi Kanagawa-ken(JP)**

(74) Representative: **Beresford, Keith Denis Lewis et al BERESFORD & Co. 2-5 Warwick Court High Holborn London WC1R 5DJ(GB)**

## Description

### BACKGROUND OF THE INVENTION

The present invention relates to an information processing method for erasing information recorded on an erasable recording medium and to an apparatus therefor.

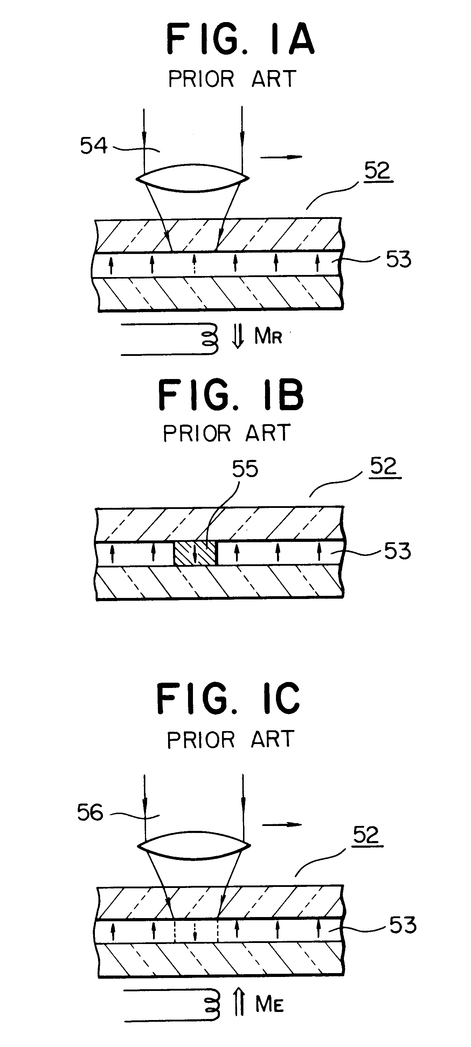

A magneto-optical recording medium 52 whose cross-section in schematically shown, for example, in Figure 1A of the accompanying drawings is known as an erasable recording medium. This magneto-optical recording medium has as a recording layer 53 a magnetic film whose readily magnetizable axis is perpendicular to the film surface. Recording of information may be accomplished by arranging the directions of magnetization of the recording layer 53 in one direction in advance, and scanning the recording layer by a light beam 54 intensity-modulated in conformity with the information while extraneously applying a magnetic field $M_R$ in the direction opposite to said one direction. The portion of the recording layer to which the light beam is applied is once demagnetized, and then is magnetized in the opposite direction to the other portion by an extraneous magnetic field and forms a recording bit 55 corresponding to the information as shown in Figure 1B of the accompanying drawings. The thus recorded information may be read out in a well-known manner using the magneto-optical effect by applying an unmodulated light beam of low intensity to the recording layer and detecting the light reflected by or transmitted through the recording layer. When the recorded information is to be erased, a light beam 56 is applied to the area in which the information is recorded while an extraneous magnetic field $M_E$ in the opposite direction to the direction during recording (i.e., the direction in which the recording layer was magnetized before recording) is applied to the recording layer as shown in Figure 1C of the accompanying drawings.

To accomplish reliable erasing without leaving any unerased portion when the information is to be erased as described above, it is necessary that the erasing light beam accurately scan the area in which the information is recorded. So, it is proposed to increase the power of the light beam during erasing more than during recording. This is a technique for reliably accomplishing erasing even if more or less deviation of the scanning region is caused in a direction perpendicular to the direction in which the recording pit row continues (the so-called tracking direction) by making the erasing range by the light beam larger than the width of the recording bit. However, the error in the tracking direction is allowable in the above-described technique, such technique has been still insufficient when the error in the beam scanning direction is taken into consideration. This will be described hereinafter.

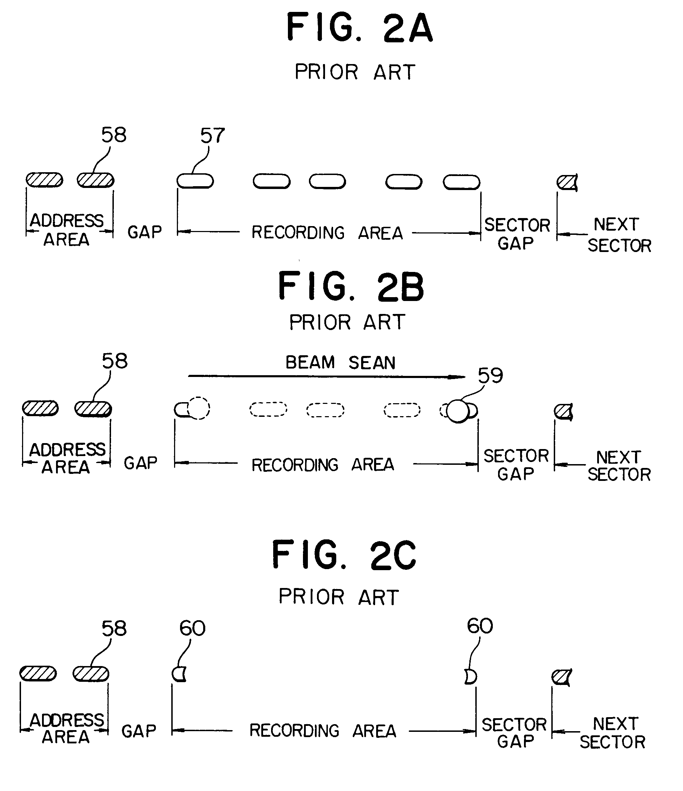

As shown in the schematic plan view of Figure 2A of the accompanying drawings, a magneto-optical recording medium is generally divided into predetermined units called sectors. Each sector in turn is divided into an address area and a recording area, and a gap portion is provided therebetween. In the address area, an address number or the like indicative of the position of that sector on the medium is pre-recorded by an unerasable bit 58 formed by the unevenness or the like of the medium substrate. In the recording area, the recording bit 57 is magnetically recorded by the afore-described method. Also, this sector is separated from the next sector by a sector gap.

Here, when the recording bit 57 is to be erased, the recording area may be scanned by an erasing light beam spot 59 as shown in Figure 2B. However, if the turn-on of the light beam is too late or the turn-off of the light beam is too early due to the error of the timing count for turning on and turning off the light beam and to the irregularity of the beam scanning speed, unerased portions 60 of the recording bit are caused as shown in Figure 2C of the accompanying drawings. Such unerased portions 60 have caused a reduction in the reliability of recording when information is re-recorded in this area.

An arrangement for recording or erasing data from an optical disc is disclosed in EP-A-0218243, which was published on 15 April 1987 (after the priority date of the present application), designating DE, FR and GB. This relates to a system in which erasing and recording are carried out using different light beams, which scan along a data track simultaneously slightly spaced from each other. Both the erase beam and the read beam have a high intensity portion to heat the recording medium, but have different beam profiles so that the medium cools rapidly into a low reflectivity non-crystaline state following heating by the recording beam and cools slowly into a high reflectivity crystaline state following heating by the erase beam. Since the two beams are spaced from each other, they must be operated with different timings if they are to scan the same area, requiring a somewhat complex timing operation. The timings of operation of the light beams is controlled, with reference to the space in between them, so that the erase beam traverses a portion of the data track which extends beyond the track portion traversed by the data beam at both ends thereof.

JP-A-58-70402 discloses an arrangement for writing onto and erasing from a floppy disc, with separate write and erase heads. The write and erase heads are spaced sideways from each other as well as being spaced in the direction of a data track, so that the erase head traverses a part of the data track which is offset sideways from the part traversed by the write head. Both heads are operated simultaneously and the erase head trails behind the write head, so that the function of the erase head is not to erase old data before rewriting with the write head but is to erase a portion of the floppy disc adjacent the area which has just been written by the write head. Because the write head and the erase are spaced from each other in the direction of the data track, separate timing is required for their operations, and the timing of the operation of the erase head is controlled so that it erases an area of the floppy disc adjacent the area written by the write head and extending beyond the area written by the write head at each end, although the operation of the erase head begins after the operation of the write head in view of the space in between them.

## SUMMARY OF THE INVENTION

According to the present invention there is provided a magneto-optic recording apparatus as set out in claim 1. Optional features are set out in the remaining claims.

Embodiments of the invention, given by way of non-limiting example, will now be described with reference to the accompanying drawings.

## BRIEF DESCRIPTION OF THE DRAWINGS

Figures 1A - 1C are schematic cross-sectional views illustrating the process in which information is recorded on a magneto-optical recording medium and the recorded information is erased.

Figures 2A - 2C are schematic plan views showing the process in which information recorded on a magneto-optical recording medium is erased.

Figure 3 is an block diagram showing an embodiment of the information processing apparatus of the present invention.

Figure 4 is a block diagram showing an example of the construction of a write gate control circuit in the apparatus shown in Figure 3.

Figures 5A - 5F are timing charts showing the output signals of various portions of the circuit shown in Figure 4.

Figure 6 schematically shows the application period of a light beam based on the method of the present invention.

Figure 7 is a block diagram showing another example of the construction of the write gate control circuit in the apparatus shown in Figure 3.

## DESCRIPTION OF THE PREFERRED EMBODIMENTS

An embodiment of the present invention will hereinafter be described in detail with reference to the drawings.

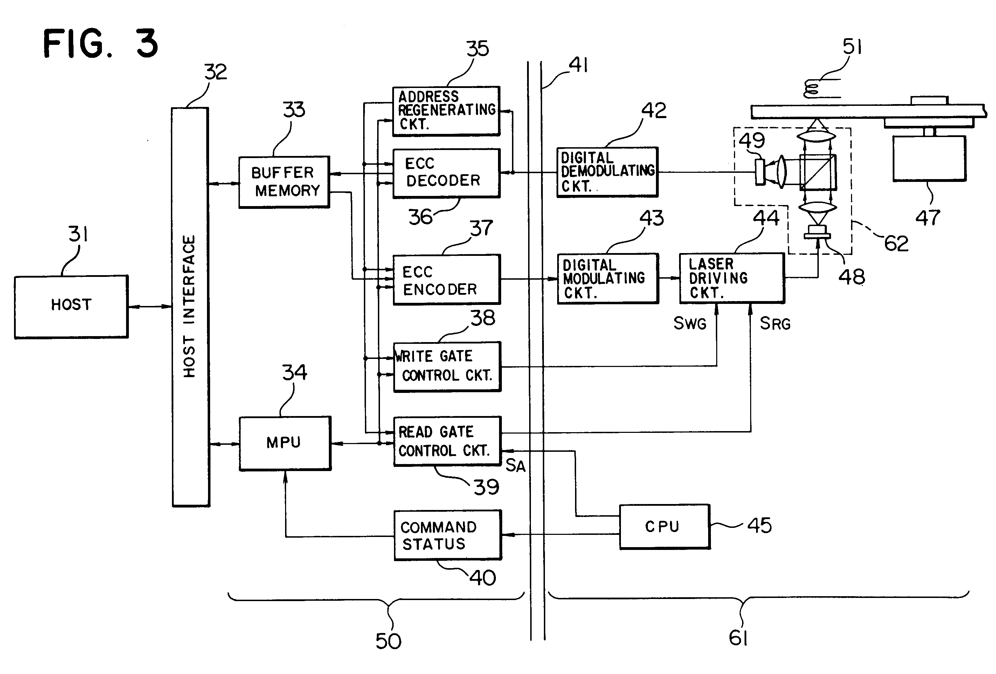

Figure 3 is a block diagram showing an embodiment of the present invention applied to a magneto-optical information recording apparatus. In Figure 3, reference numeral 31 designates a host computer, reference numeral 61 denotes a disk drive, reference numeral 50 designates a controller for controlling the operation of the drive 61, reference numeral 32 denotes a host interface connecting the host computer 31 and the controller 50 together, and reference numeral 41 designates a drive interface connecting the drive 61 and the controller 50 together. A magnetooptical disk 46 is mounted in the drive 61 and may be rotated by a spindle motor 47. A light beam is applied to the rotated disk 46 from an optical head 62, whereby recording, reproduction and erasing of information are effected. The optical head 62 includes a semiconductor laser 48 which is a light source, an optical system for condensing the light beam emitted from the semiconductor laser onto the disk, and a photodetector 49 for detecting the reflected light from the disk. The drive 61 has a digital demodulating circuit 42, a digital modulating circuit 43, a laser driving circuit 44, a drive side central processing unit (CPU) 45 and an extraneous magnetic field applying means 51. The controller 50 contains therein a buffer memory 33, a micro processing unit (MPU) 34, an address regenerating circuit 35, an error correction code (ECC) decoder 36, an ECC encoder 37, a write gate control circuit 38, a read gate control circuit 39 and a command status 40.

The operation of this apparatus will now be described.

During recording, an instruction to effect recording of information is supplied from the CPU 45 to the MPU 34 through the command status 40. When an allow signal $S_A$ is input from the CPU 45, a read gate signal $S_{RG}$ is supplied from the read gate control circuit 39 to the laser driving circuit 44. The semiconductor laser 48 continuously emits a light at the read mode, i.e., at a low intensity, and the light beam is scanned on the disk 46. The reflected light from the disk 46 is detected by the photodetector 49, and the detection signal is input to the address regenerating circuit 35 through the digital demodulating circuit 42. The address number recorded on the disk 46 is regenerated by the address regenerating circuit 35. When the regenerated address number coincides with the address number of a desired sector designated by the MPU 34, an enable signal is output from the address regenerating circuit 35 to the write gate control circuit 38. A write gate signal $S_{WG}$ corresponding to the recording area on the disk 46 is output from the write gate control circuit 38 to the laser driving circuit 44. The recorded information is once stored from the host computer 31 into the buffer memory 33 through the host interface 32. A recording signal is input to the laser driving circuit 44 through the ECC encoder 37 and the digital demodulating circuit 43. When said write gate signal is in its ON state, the semiconductor laser is turned on and off in response to the information signal and information is recorded on the disk 46.

When the thus recorded information is to be erased, an operation similar to that described above is performed until an enable signal is output from the address regenerating circuit 35. However, an instruction of the erasing mode is provided from the MPU 34 to the write gate control circuit 38 and a gate signal longer than during recording is output. The laser driving circuit causes the semiconductor laser to emit a light for the period of time during which said gate signal is in its ON state. Thereby, the light beam is scanned over an area longitudinally longer than the recording area, i.e., an area from a gap to a sector gap. Accordingly, even if more or less error occurs in the scanning direction, erasing of information can be reliably accomplished.

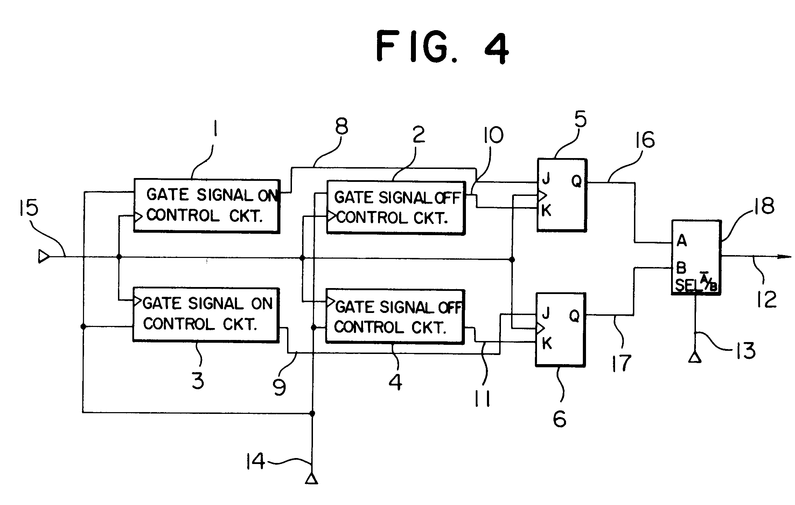

A specific example of the construction of the write gate control circuit 38 is shown in Figure 4. In Figure 4, reference numerals 1 and 2 designate gate signal ON control circuits, and reference numerals 3 and 4 denote gate signal OFF control circuits. These control circuit each are comprised of a counter and a plurality of transister logics (TTL), and are designed to output a pulse corresponding to one clock and stop when the count of the counter reaches a predetermined value. Reference numerals 5 and 6 designate latches, and reference numerals 8, 9, 10 and 11 denote the output lines from the respective control circuits. Reference numeral 12 designates a gate signal, reference numeral 13 denotes a circuit selecting control signal input from the MPU 34, reference numeral 14 designates a counter operating enable signal input from the address regenerating circuit, reference numeral 15 denotes a clock signal input from an internal clock signal generator, not shown, and reference numeral 18 designates a multiplexer.

The operation of the circuit shown in Figure 4 will hereinafter be described. Let it be assumed that the control circuits 1 and 2 are for data recording and the control circuits 3 and 4 are for data erasing.

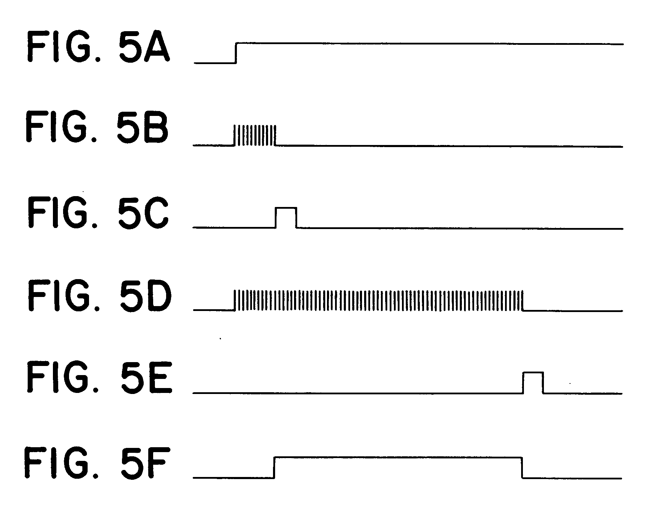

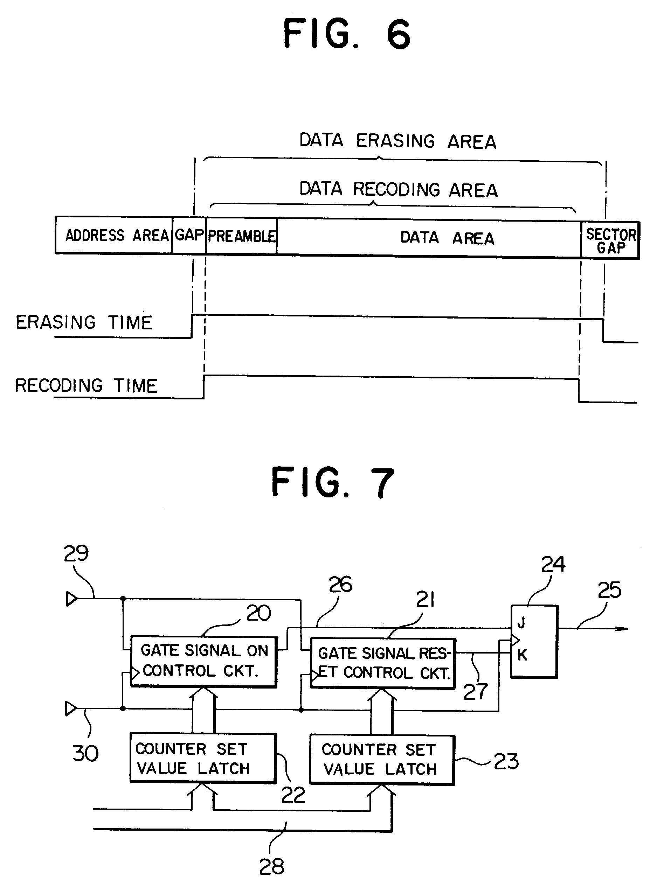

During data recording, the multiplexer 18 selects a terminal A in response to the control signal 13 from the MPU 34 so that the gate signal 12 is controlled by the control circuits 1 and 2. When in this state, the enable signal 14 input from the address regenerating circuit 35 becomes active as shown in Figure 5A, the counters in the control circuits 1 and 2 start to count the clock signal 15 as shown in Figures 5B and 5D. Here, the set value of the counter in the control circuit 1 is made smaller than the set value of the counter in the control circuit 2. When the count value of the counter in the control circuit 1 becomes equal to the set value, a coincidence pulse as shown in Figure 5C is output to the line 8 and latched by the latch 5, and the output 16 shown in Figure 5F becomes active. The set value of the counter in the control circuit 2 is greater than the set value of the counter in the control circuit 1 and therefore, after the coincidence pulse of Figure 5C has been output, the count value of the counter in the control circuit 2 becomes equal to the set value and the coincidence pulse shown in Figure 5E is output to the line 10. The output 16 is reset by the latch 5 as shown in Figure 5F. Since the multiplexer 18 selects the terminal A, the output 16 is intactly input as a gate signal 12 to the aforementioned laser driving circuit 44. If the rising of the enable signal 14 is brought into coincidence with the detection of the termination of the address area on the recording medium shown in Figure 6 and the set value of the counter in the control circuit is brought into coincidence with the period during which the light beam crosses the gap portion and the set value of the counter in the control circuit 2 is brought into coincidence with the period during which the light beam crosses the gap portion and the data recording area, the gate signal 12 assumes the gate timing during recording shown in Figure 6.

During data erasing, the multiplexer 18 selects a terminal B in response to the control siganl 13 from the MPU 34 and change-over is made so that the gate signal 12 is controlled by the control circuits 3 and 4. When in this state, the enable signal 14 input from the address regenerating circuit 35 becomes active, the counters in the control circuits 3 and 4 start to count the clock signal 15 as during recording. Here, the set value of the counter in the control circuit 3 is made smaller than the set value of the counter in the control circuit 4. When the count value of the counter in the control circuit 3 becomes equal to the set value, a coincidence pulse is output to the line 9 and is latched by the latch 6, and the output 17 becomes active. The set value of the counter in the control circuit 4 is greater than the set value of the counter in the control circuit 3 and therefore, after a coincidence pulse has been output to the line 9, the count value of the counter in the control circuit 4 becomes equal to the set value and a coincidence pulse is output to the line 11. The output 17 is reset by the latch 6. Since the multiplexer 18 selects the terminal B, the output 17 is input as a gate signal 12 to the aforementioned laser driving circuit 44. If, as during recording, the rising of the enable signal 14 is brought into coincidence with the detection of the termination of the address area on the recording medium shown in Figure 6 and the set value of the counter in the control circuit 3 is set so that a coincidence pulse is output intermediately of the gap portion and the set value of the counter in the control circuit 4 is set so that a coincidence pulse is output in the sector gap succeeding to the data recording area, the gate timing during erasing shown in Figure 6 is obtained. The driving of the semiconductor laser 44 in Figure 3 is effected in accordance with these gate timings. Thus, during erasing, the light beam scans a larger area than during recording, and reliable erasing of information becomes possible as previously described.

Figure 7 is a block diagram showing another example of the construction of the write gate control circuit in the apparatus shown in Figure 3. In the example shown in Figure 4, discrete circuits are provided to vary the allowed laser turn-on period by the gate signal between the recording time and the erasing time, whereas in the present example, control of the gate signal is effected by one kind of control circuit. In Figure 7, reference numeral 20 designates a gate signal ON control circuit, reference numeral 21 denotes a gate signal reset control circuit, reference numerals 22 and 23 designate latches for setting the counters in the control circuits, reference numeral 24 denotes a gate signal outputting latch, reference numeral 25 designates a gate signal, reference numerals 26 and 27 denote the output lines from the respective control circuits, reference numeral 28 designates the MPU bus from the MPU, reference numeral 29 denotes the enable signal from the address regenerating circuit, and reference numeral 30 designates the clock signal from an internal clock signal generator, not shown.

During data recording, such a set value is latched by the latch 22 that the coincidence pulse of the control circuit 20 is output from the MPU bus 28 to the line 26 by the MPU 34 upon termination of the gap of Figure 6. Also, such a set value is latched by the latch 23 that the coincidence pulse of the control circuit 21 is output upon termination of the recording area.

Likewise, during erasing, such a set value is latched by the latch 22 that the coincidence pulse of the control circuit 20 is output intermediately of the gap portion of Figure 6, and preparation is made such that the coincidence pulse of the control circuit 21 is output to the latch 23 intermediately of the sector gap succeeding to the recording area. As described above, by changing the set values of the counters in the control circuits by the MPU between the recording time and the erasing time, there is obtained the timing of the gate signal of Figure 6 similar to that described previously.

In addition to the above-described embodiment, various modifications and applications of the present invention are conceivable. For example, in the above-described embodiment, counters are used as means for changing the timing during information recording and during erasing, but alternatively, a high-speed sequencer may be used. Other modifications and alternatives will be apparent to those skilled in the art.

## Claims

1. A magneto-optic recording apparatus comprising first means (44, 62) to apply a light beam to a magneto-optic recording medium, second means (51) to apply a magnetic field to the magneto-optic recording medium, and control means operable in a write operation to cause the first means (44, 62) to apply the light beam to a magneto-optic recording medium with a write intensity following identification of a data area of the recording medium and to cause the second means (51) to apply the magnetic field to the magneto-optic recording medium in a write direction, and operable in an erase operation to cause the first means (44, 62) to apply the light beam to a magneto-optic recording medium with a write intensity following identification of a data area of the recording medium and to cause the second means (51) to apply the magnetic field to the magneto-optic recording medium in an erase direction,

    characterised in that, for writing and erasing operations on the same data area, the control means causes the first means (44, 62) to apply the light beam with a write intensity after a smaller delay following identification of the data area in an erase operation than in a write operation and causes the first means (44, 62) to cease to apply the light beam with a write intensity after a greater delay following identification of the data area in an erase operation than in a write operation, so that the region of the recording medium which is erased in an erase operation extends, at both ends of the region, beyond the region which is written in a write operation for the same data area.

2. Apparatus according to claim 1 in which the control means comprises a gate means (38) for gating the application by the first means (44, 62) of a write-intensity light beam.

3. Apparatus according to claim 2 in which the gate means (38) comprises a first gate control circuit (1, 2, 5) for controlling the times at which the first means (44, 62) applies and ceases to apply the light beam with a write intensity during a write operation, a second gate control circuit (3, 4, 6) for controlling the said times during an erase operation, and selector means (18) for selecting which of the first and second gate control circuits provides a gate signal output to the first means.

4. Apparatus according to claim 2 in which the gate means comprises a gate control circuit (20, 21, 24) for controlling the times at which the first means (44, 62) applies and ceases to apply the light beam with a write intensity, and the control means further comprises setting means for setting the said times into the gate control circuit.

5. Apparatus according to claim 4 in which the gate control circuit (20, 21, 24) comprises a counter and the setting means is operable to set the count value of the counter.

6. Apparatus according to any one of the preceding claims in which the first means (44, 62) applies the light beam with a read intensity during write and erase operations and subsequently applies the light beam with a write intensity.

7. Apparatus according to any one of the preceding claims in which the data area is identified in the write and erase operations by detection and identification of an address area on the recording medium associated with the data area.

8. Apparatus according to claim 7 as dependent on claim 6 in which the first means (44, 62) applies the light beam to the recording medium with a read intensity to read the address area.

**Patentansprüche**

1. Magnetooptische Aufzeichnungsvorrichtung mit ersten Einrichtungen (44, 62) zum Aufbringen eines Sichtstrahles auf ein magnetooptisches Aufzeichnungsmedium, zweiten Einrichtungen (51) zum Anlegen eines Magnetfeldes an das magnetooptische Aufzeichnungsmedium und Steuereinrichtungen, die in einem Schreibbetrieb betätigbar sind, damit die ersten Einrichtungen (44, 62) den Lichtstrahl auf ein magnetooptisches Aufzeichnungsmedium mit einer Schreibintensität nach der Identifikation eines Datenbereiches des Aufzeichnungsmediums richten und damit die zweiten Einrichtungen (51) das Magnetfeld an das magnetootische Aufzeichnungsmedium in einer Schreibrichtung anlegen, und die in einem Löschbetrieb betätigbar sind, damit die ersten Einrichtungen (44, 62) den Lichtstrahl auf ein magnetooptisches Aufzeichnungsmedium mit einer Schreibintensität nach der Identifikation eines Datenbereiches des Aufzeichnungsmediums richten und damit die zweiten Einrichtungen (51) das Magnetfeld an das magnetooptische Aufzeichnungsmedium in einer Löschrichtung anlegen, dadurch gekennzeichnet, daß zum Durchführen eines Schreibund Löschbetriebes auf dem gleichen Datenbereich die Steuereinrichtungen bewirken, daß die ersten Einrichtungen (44, 62) den Lichtstrahl mit einer Schreibintensität nach einer kleineren Verzögerung nach der Identifikation des Datenbereiches in einem Löschbetrieb aufbringen als in einem Schreibbetrieb und daß die ersten Einrichtungen (44, 62) aufhören, den Lichtstrahl mit einer Schreibintensität nach einer größeren Verzögerung nach der Identifikation des Datenbereiches in einem Löschbetrieb als in einem Schreibbetrieb aufzubringen, so daß sich der Bereich des Aufzeichnungsmediums, der in einem Löschbetrieb gelöscht wird, an beiden Enden des Bereiches über den Bereich hinaus erstreckt, der in einem Schreibbetrieb für den gleichen Datenbereich geschrieben wird.

2. Vorrichtung nach Anspruch 1, bei der die Steuereinrichtungen eine Toreinrichtung (38) zum Torsteuern der Aufbringung eines Schreibintensitätslichtstrahles durch die ersten Einrichtungen (44, 62) umfassen.

3. Vorrichtung nach Anspruch 2, bei der die Toreinrichtungen (38) eine erste Torsteuerschaltung (1, 2, 5) zum Steuern der Male, mit denen die ersten Einrichtungen (44, 62) den Lichtstrahl mit einer Schreibintensität während eines Schreibbetriebes aufbringen und mit der Aufbringung aufhören, eine zweite Torsteuerschaltung (3, 4, 6) zum Steuern der genannten Male während eines Löschbetriebes und Wähleinrichtungen (18) zum Wählen, welche aus der ersten und zweiten Torsteuerschaltung ein Ausgangstorsignal an die ersten Einrichtungen abgibt, umfassen.

4. Vorrichtung nach Anspruch 2, bei der die Toreinrichtungen eine Torsteuerschaltung (20, 21, 24) zum Steuern der Male, mit denen die ersten Einrichtungen (44, 62) den Lichtstrahl mit einer Schreibintensität aufbringen und mit dem Aufbringen aufhören, und die Steuereinrichtungen des weiteren Einrichtungen zum Setzen der Male in der Torsteuerschaltung umfassen.

5. Vorrichtung nach Anspruch 4, bei der die Torsteuerschaltung (20, 21, 24) einen Zähler aufweist und die Setzeinrichtungen derart betätigbar sind, daß sie den Zählwert des Zählers setzen.

6. Vorrichtung nach einem der vorangehenden Ansprüche, bei der die ersten Einrichtungen (44, 62) den Lichtstrahl mit einer Leseintensität während des Schreib- und Löschbetriebes aufbringen und anschließend den Lichtstrahl mit einer Schreibintensität aufbringen.

7. Vorrichtung nach einem der vorangehenden Ansprüche, bei der der Datenbereich im Schreib- und Löschbetrieb durch Detektion und Identifikation eines Adreßbereiches auf dem dem Datenbereich Zugeordneten Aufzeichnungsmedium identifiziert wird.

8. Vorrichtung nach Anspruch 7 in Abhängigkeit von Anspruch 6, bei der die ersten Einrichtungen (44, 62) den Lichtstrahl auf das Aufzeichnungsmedium mit einer Leseintensität aufbringen, um den Adreßbereich zu lesen.

**Revendications**

1. Appareil d'enregistrement magnéto-optique comportant des premiers moyens (44, 62) destinés à appliquer un faisceau lumineux à un support d'enregistrement magnéto-optique, des seconds moyens (51) destinés à appliquer un champ magnétique au support d'enregistrement magnéto-optique, et des moyens de commande pouvant être mis en oeuvre dans une opération d'écriture pour amener les premiers moyens (47, 62) à appliquer le faisceau lumineux à un support d'enregistrement magnéto-optique avec une intensité d'écriture à la suite de l'identification d'une zone de données du support d'enregistrement et à amener les seconds moyens (51) à appliquer le champ magnétique au support d'enregistrement magnéto-optique dans une direction d'écriture, et pouvant être mis en oeuvre en une opération d'effacement pour amener les premiers moyens (44, 62) à appliquer le faisceau lumineux à un support d'enregistrement magnéto-optique avec une intensité d'écriture à la suite de l'identification d'une zone de données du support d'enregistrement et pour amener les seconds moyens (51) à appliquer le champ magnétique au support d'enregistrement magnéto-optique dans une direction d'effacement,

caractérisé en ce que, pour des opérations d'écriture et d'effacement sur la même zone de données, les moyens de commande amènent les premiers moyens (44, 62) à appliquer le faisceau lumineux avec une intensité d'écriture après un retard, à la suite d'une identification de la zone de données lors d'une opération d'effacement, plus petit que dans une opération d'écriture, et amènent les premiers moyens (44, 62) à cesser d'appliquer le faisceau lumineux avec une intensité d'écriture après un retard, à la suite de l'identification de la zone de données lors d'une opération d'effacement, plus grand que dans une opération d'écriture, afin que la région du support d'enregistrement qui est effacée lors d'une opération d'effacement s'étende, aux deux extrémités de la région, au-delà de la région qui est écrite lors d'une opération d'écriture pour la même zone de données.

2. Appareil selon la revendication 1, dans lequel les moyens de commande comprennent un moyen de déclenchement (38) destiné à déclencher l'application par les premiers moyens (44, 62) d'un faisceau lumineux d'intensité d'écriture.

3. Appareil selon la revendication 2, dans lequel le moyen de déclenchement (38) comporte un premier circuit de commande de déclenchement (1, 2, 5) destiné à commander les temps auxquels les premiers moyens (44, 62) appliquent et cessent d'appliquer le faisceau lumineux avec une intensité d'écriture durant une opération d'écriture, un second circuit de commande de déclenchement (3, 4, 6) destiné à commander lesdits temps durant une opération d'effacement, et un moyen sélecteur (18) destiné à sélectionner lequel des premier et second circuits de commande de déclenchement délivre en sortie un signal de déclenchement aux premiers moyens.

4. Appareil selon la revendication 2, dans lequel le moyen de déclenchement comporte un circuit de commande de déclenchement (20, 21, 24) destiné à commander les temps auxquels les premiers moyens (44, 62) appliquent et cessent d'appliquer le faisceau lumineux avec une intensité d'écriture, et les moyens de commande comportent en outre un moyen d'établissement destiné à établir lesdits temps dans le circuit de commande de déclenchement.

5. Appareil selon la revendication 4, dans lequel le circuit de commande de déclenchement (20, 21, 24) comporte un compteur et les moyens de positionnement peuvent être mis en oeuvre pour positionner la valeur de comptage du compteur.

6. Appareil selon l'une quelconque des revendications précédentes, dans lequel les premiers moyens (44, 62) appliquent le faisceau lumineux avec une intensité de lecture pendant des opérations d'écriture et d'effacement et appliquent ensuite le faisceau lumineux avec une intensité d'écriture.

7. Appareil selon l'une quelconque des revendications précédentes, dans lequel la zone de données est identifiée lors des opérations d'écriture et d'effacement par une détection et une identification d'une zone d'adresse sur le support d'enregistrement associée à la zone de données.

8. Appareil selon la revendication 7, en dépendance de la revendication 6, dans lequel les premier moyens (44, 62) appliquent le faisceau lumineux au support d'enregistrement avec une intensité de lecture pour lire la zone d'adresse.

# FIG. IA
PRIOR ART

# FIG. IB
PRIOR ART

# FIG. IC
PRIOR ART

# FIG. 2A
PRIOR ART

58    57

ADDRESS
AREA    GAP    ← RECORDING AREA →    SECTOR
GAP    NEXT
SECTOR

# FIG. 2B
PRIOR ART

58    BEAM SEAN    59

ADDRESS
AREA    GAP    ← RECORDING AREA —    SECTOR
GAP    NEXT
SECTOR

# FIG. 2C
PRIOR ART

58    60    60

ADDRESS
AREA    GAP    ← RECORDING AREA —    SECTOR
GAP    NEXT
SECTOR

# FIG. 3

EP 0 263 663 B1

# FIG. 4

EP 0 263 663 B1

FIG. 5A

FIG. 5B

FIG. 5C

FIG. 5D

FIG. 5E

FIG. 5F

# FIG. 6

DATA ERASING AREA

DATA RECODING AREA

| ADDRESS AREA | GAP | PREAMBLE | DATA AREA | SECTOR GAP |

ERASING TIME

RECODING TIME

# FIG. 7